# EUROPÄISCHE PATENTSCHRIFT

(11) **EP 1 118 494 B1**
(45) Veröffentlichungstag und Bekanntmachung des Hinweises auf die Patenterteilung: **06.07.2005**
(21) Anmeldenummer: 00126371.4
(22) Anmeldetag: 02.12.2000
(51) Int. Cl.: B60K 31/00, B60S 5/00, G01M 11/06, G01B 11/27

(54) **Verfahren zur Ausrichtung eines Sensors in einem abstandsbezogenen Fahrgeschwindigkeitsregelsystem bei einem Fahrzeug**
Method of aligning a sensor in an adaptive cruise control system in a vehicle
Procédé pour aligner un capteur dans un système de commande de vitesse adaptatif dans un véhicule

(30) Priorität: 18.01.2000 DE 10001783
(43) Veröffentlichungstag der Anmeldung: 25.07.2001
(73) Patentinhaber: Bayerische Motoren Werke Aktiengesellschaft, 80809 München (DE)
(72) Erfinder: Hopfenmüller, Georg, 85356 Freising (DE)

(56) Entgegenhaltungen:
- WO-A-98/38691
- US-A- 4 134 680
- US-A- 4 854 702

## Beschreibung

Die Erfindung betrifft ein Verfahren zur Ausrichtung eines ACC-Sensors bei einem Fahrzeug.

Das Dokument WO98/38691 beschreibt ein Verfahren zur Justierung der Ausrichtung einer Strahlcharakteristik eines Entfernungssensors für ein Kraftfahrzeug. Dabei wird ein gängiges Scheinwerfereinstellungsgerät für Werkstätten mit einem Zielobjekt für den Abstandsensor verbunden.

Das Fahrzeug kann dazu auf einem an sich bekannten Achsmeßstand positioniert werden. Dabei wird der Entfernungssensor auf vorgegebene Pegel justiert.

Unter ACC-Sensor (ACC = Adaptive Cruise Control) wird vorliegend ein Sensor verstanden, der durch Aussendung und Empfangen von Strahlen Objekte im Vorwärtsbewegungsbereich eines Fahrzeugs erfaßt. Unter Zuhilfenahme von solchen Sensoren können Fahrzeug-Regeleinrichtungen betrieben werden, die beispielsweise einen bestimmten Abstand zu einem vorausfahrenden Fahrzeug einhalten oder eine bestimmte Aktion durchführen, wenn plötzlich ein Hindernis vor einem Fahrzeug auftaucht. Solche ACC-Sensoren funktionieren beispielsweise auf Laser-, Mikrowellen- oder Ultraschallbasis.

Zur Sicherstellung einer einwandfreien Funktionsweise muß ein solcher ACC-Sensor immer korrekt ausgerichtet sein. Eine Fehlausrichtung kann zu einer Fehlfunktion eines entsprechenden Regelsystems führen.

Aufgabe der vorliegenden Erfindung ist es, ein Verfahren zur Ausrichtung eines oben definierten ACC-Sensors bei einem Fahrzeug anzugeben.

Diese Aufgabe wird durch die im Anspruch 1 genannten Merkmale gelöst.

Demgemäß wird eine Reflektionsfläche, z.b. ein Spiegel, verwendet, der die von dem ACC-Sensor ausgehenden Strahlen reflektiert und auf einen in der ACC-Einrichtung befindlichen Empfänger zurückwirft. Bei genau ausgerichteter Reflektionsfläche kann der ACC-Sensor durch Justieren in der Weise, daß ein bestimmter oder maximaler Anteil der ausgesandten Strahlung reflektiert wird, ordnungsgemäß eingerichtet werden.

Ein Hauptproblem ist es daher, die Reflektionsfläche auszurichten. Dies wird vorwiegend dadurch gelöst, daß die Horizontalachse der Reflektionsfläche parallel zur Hinterachse des Fahrzeugs ausgerichtet wird. Die Vertikalachse der Reflekbonsfläche wird im wesentlichen senkrecht zur Längsachse des Fahrzeugs ausgerichtet. Diese Längsachse ist durch die Flucht von Vorder- und Hinterachsen definiert.

Mit der erfindungsgemäßen Vorgehensweise vermeidet man Fehljustierungen beim Ausrichten des ACC-Sensors. Insbesondere bei einer Ausrichtung eines ACC-Sensors nach der Karosserie eines Fahrzeugs ist nicht sichergestellt, daß der ACC-Sensor auch wirklich in Fahrzeuglängsrichtung ausgerichtet ist. Diese ist nicht durch die Karossene selbst, sondern durch die Stellung der Fahrzeughinterachse bestimmt. Überdies muß natürlich auch für eine vertikale Ausrichtung die Orientierung der Fahrzeugvorder- und -hinterachsen zueinander berücksichtigt werden, um zu vermeiden, daß der Sensor seine Strahlung nicht zu weit nach unten oder oben aussendet.

Gemäß einer bevorzugten Ausführungsform der Erfindung wird beidseitig des Fahrzeugs jeweils der Abstand zwischen Hinterachse und der horizontalen Achse der Reflektionsfläche gleich gewählt. Dazu kann ein Meßinstrument, insbesondere ein Maßband, verwendet werden, mit dem man beidseitig des Fahrzeugs Markierungen anbringt. Gegenüber diesen Markierungen kann nun die Reflektionsfläche justiert werden. Beispielsweise geschieht dies durch Verwenden eines Laserpointers, der so an die Reflektionsfläche angelegt wird, daß dessen Laserstrahl parallel zu der Horizontalachse des Spiegels verläuft. Wird der Laserstrahl dann auf die Markierungen hin ausgerichtet, so ist eine parallele Ausrichtung der horizontalen Achse der Reflektionsfläche gegenüber der Hinterachse des Fahrzeugs sichergestellt.

Zur im wesentlichen senkrechten Ausrichtung der vertikalen Achse der Reflektionsfläche gegenüber der Längsachse des Fahrzeugs kann beispielsweise die Ausrichtung der Fahrzeuglängsachse mittels eines Laserpointers, der eine Niveauvorrichtung aufweist, festgestellt werden. Die Niveauvorrichtung gibt dann den Winkel der Geraden, die die beiden Achsen miteinander verbindet gegenüber der Horizontalen an. Wird nun die Reflektionsfläche in der Weise eingerichtet, daß dessen vertikale Achse um 90 Grad gegenüber dem ermittelten Winkel gedreht liegt, so ist eine ordnugsgemäße vertikale Ausrichtung der Reflektionsfläche erreicht.

Insgesamt ist mit der vorliegenden Erfindung eine einfache und kostengünstige Möglichkeit zur Ausrichtung eines ACC-Sensors bei einem Fahrzeug ermöglicht.

Eine konkrete Ausführungsform der Erfindung wird nachfolgend und anhand der beiliegenden Zeichnungen näher erläutert. Die Zeichnungen zeigen in
- Figur 1: eine Darstellung eines vor einem Fahrzeug mit ACC-Sensor aufgestellten Spiegels,
- Figur 2: eine Darstellung einer Anbringung einer Markierung, welche parallel zu der Fahrzeughinterachse verläuft,
- Figur 3: eine Darstellung zur Veranschaulichung einer senkrechten Ausrichtung einer vertikalen Achse eines Spiegels gegenüber einer Fahrzeuglängsachse,
- Figur 4: eine schematische Skizze eines Laserpointers zur Durchführung der vorliegenden Erfindung,
- Figur 5: eine Darstellung zur Veranschaulichung der Ermittlung der Ausrichtung einer Fahrzeuglängsachse und
- Figur 6: eine schematische Darstellung eines ausrichtbaren Spiegels.

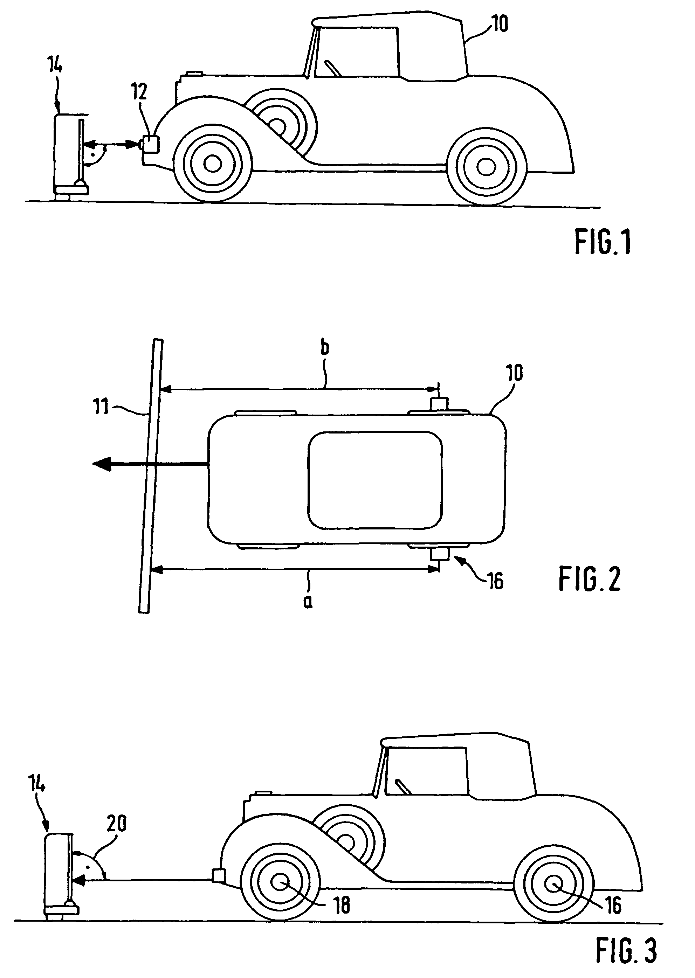

In Figur 1 ist in schematischer Weise ein Fahrzeug 10 mit einem ACC-Sensor 12 mit einer Sende- und einer Empfangseinheit (beide nicht weiter gezeigt) dargestellt. Vor dem Fahrzeug ist eine Reflektionseinheit 14 aufgebaut, welche die vom ACC-Sensor 12 ausgesandten Strahlen unmittelbar zurückreflektiert, so daß eine Einstellung des Sensors ohne weiteres möglich ist. Im vorliegendem Fall wird der Sensor 12 so eingestellt, daß der größte Teil der ausgesandten Strahlen zurückreflektiert und empfangen wird Wesentlich hierbei ist eine einwandfreie Ausrichtung der Reflektionseinheit 14. Die Vorgehensweise zur genauen Ausrichtung hierfür wird nachfolgend erläutert:

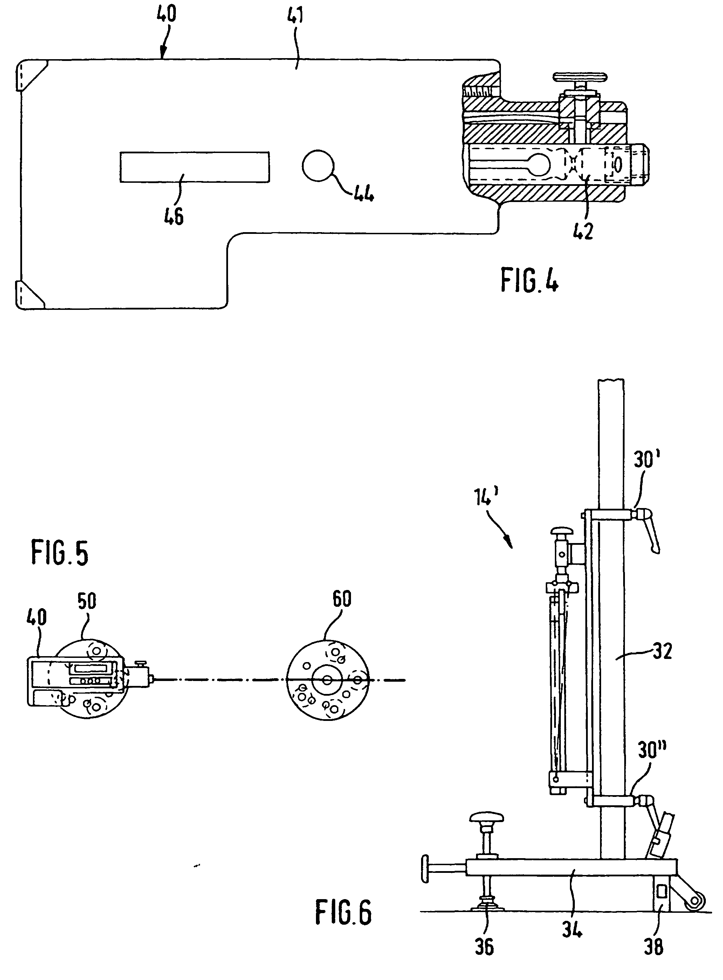

In Figur 2 ist dargestellt, daß vor dem Fahrzeug 10 zunächst eine Markierung 11 angebracht wird, die beidseitig des Fahrzeugs einen identischen Abstand a und b von der Hinterachse 16 des Fahrzeugs 10 hat. Dazu wird beispielsweise mit einem Maßband jeweils die gleiche Strecke beidseitig des Fahrzeugs abgemessen und die Markierung 11 am Boden angebracht. Gegenüber dieser Markierung 11 wird nun die Horizontalachse der Reflektionseinheit 14 parallel angeordnet. Dies kann dadurch geschehen, daß ein in Figur 4 nur schematisch dargestellter Laserpointer 40 an der Reflektionseinheit 14 derart angelegt wird, daß der von dem Laserpointer 40 ausgesandte Laserstrahl parallel zur Markierung 11 verläuft.

Der Laserpointer 40 gem. Figur 4 besitzt ein Gehäuse 41, in dem vorne eine Lasereinheit 42 zur Abgabe des Laserstrahls angeordnet ist.

Überdies ist eine Bohrung 44 in dem Gehäuse 41 des Laserpointers vorgesehen, mit welcher der Laserpointer 40 auf dem Bolzen eines Adapters, der wiederum an den Hinterräder angeordnet ist, drehbar aufgesteckt wird Der Laserpointer 40 umfaßt ferner eine nicht näher dargestellte Niveaueinrichtung 46, an der die Verschwenkung der Laserstrahlachse gegenüber der Horizontalen ermittelt werden kann. Die Niveauvorrichtung 46 kann mechanisch oder elektronisch arbeiten.

Zur Ermittlung der Ausrichtung der Fahrzeuglängsachse wird der Laserpointer 40 mit seiner Bohrung 44 auf dem Bolzen des Adapter 50 (vergl. Figur 5), der an dem hinteren Rad angeordnet ist, aufgesetzt. Die Bohrung 44 ist dabei fluchtend mit der Verlängerung des Laserstrahl der Lasereinrichtung 42 ausgerichtet. Durch Drehen des Laserpointers 40 um die Achse der Bohrung 44 bzw. des Bolzens kann der Laserstrahl auf einen Zapfen eines Adapters 60, der an dem vorderen Rad der Vorderachse angeordnet ist (vgl. ebenfalls Figur 5) ausgerichtet werden. An der Niveaueinnchtung 46 kann man nach der Ausrichtung die Abweichung der Laserachse von der Horizontalen feststellen.

Mit dieser Lageinformation wird nun die vertikale Achse der Reflektionseinheit 14 derart eingestellt, daß deren Reflektionsfläche sich im Winkel von 90 Grad (Bezugsziffer 20 in Fig. 3) zu der gerade ermittelten Fahrzeuglängsachse erstreckt.

In Figur 6 ist eine weitere Reflektionseinheit 14' dargestellt, bei der der Reflektionsschirm über zwei Klammern 30' und 30" an einem Haltemast 32 befestigt ist. Der Haltemast 32 wiederum ist an einer Basis 34 angeordnet, die sich über Füße 36 und 38 gegenüber dem Boden abstützt. Durch die Verwendung eines Fußes 36 mit einem Außengewinde, der in einem Innengewinde der Platte 34 aufgenommen ist, kann die Basisplatte 34 und somit über dem Haltemast 32 die Reflektionsfläche der Reflektionseinheit 14' verschwenkt werden. Die Ausrichtung erfolgt dabei wie oben beschrieben.

Insgesamt ist mit vorliegendem Verfahren eine genaue Ausrichtung einer Reflektionsfläche, beispielsweise eines Spiegels, gegenüber der Hinterachse des Fahrzeuges bzw. der Längsachse eines Fahrzeugs möglich. Nach dem genauen Ausrichten des Spiegels kann dann der ACC-Sensor in optimaler Weise eingestellt werden.

## Patentansprüche

1. Verfahren zur Ausrichtung eines ACC-Sensors bei einem Fahrzeug (10), mit den Schritten:
- Anordnen einer Reflektionsfläche (11) zum Reflektieren von ausgesandten ACC-Sensor-Strahlen vor dem Fahrzeug,
- Ausrichten der horizontalen Achse der Reflektionsfläche (11) parallel zur Hinterachse des Fahrzeugs,
- Ausrichten der vertikalen Achse der Reflektionsfläche im wesentlichen senkrecht zur Längsachse des Fahrzeugs, die durch die Flucht von Vorder- und Hinterachse definiert ist und
- Justieren des ACC-Sensors (12) derart, daß ein bestimmter oder maximaler Anteil der ausgesandten Strahlen reflektiert wird.

2. Verfahren nach Anspruch 1,
**dadurch gekennzeichnet,**
**daß** beidseitig des Fahrzeugs jeweils der Abstand zwischen Hinterachse und der horizontalen Achse der Reflektionsfläche gleich (a;b) gewählt wird.

3. Verfahren nach Anspruch 2,
**dadurch gekennzeichnet,**
**daß** man zur Herstellung des gleichen Abstandes mittels eines Meßinstruments äquidistante Markierungen zu beiden Seiten des Fahrzeuges (10) anbringt und die Reflektionsfläche in Bezug zu diesen Markierungen justiert.

4. Verfahren nach Anspruch 3,
**dadurch gekennzeichnet,**
**daß** zum Justieren der Reflektionsfläche (11) gegenüber den beiden Markierungen einen Laserpointer verwendet wird, der derart an die Reflektionsfläche (11) angelegt wird, daß der parallel zu der horizontalen Achse der Reflektionsfläche verlaufende Laserstrahl mit den Markierungen in Übereinstimmung gebracht ist.

5. Verfahren nach einem der vorhergehenden Ansprüche,
**dadurch gekennzeichnet,**
**daß** mittels eines eine Niveauvorrichtung aufweisenden Laserpointers, der gegenüber der Hinter- und Vorderachse fluchtend ausgerichtet wird, die Lage der Längsachse des Fahrzeugs (10) ermittelt wird und mit dieser Lageinformation die Vertikalachse der Reflektionsfläche (11) eingestellt wird.

## Claims

1. A method whereby an ACC sensor is aligned in a vehicle (10) in the following steps:
- disposing a reflecting surface (11) for reflection of rays emitted by the ACC sensor in front of the vehicle,
- aligning the horizontal axis of the reflecting surface (11) parallel with the rear axle of the vehicle,
- aligning the vertical axis of the reflecting surface substantially at right angles to the longitudinal axis of the vehicle as defined by alignment of the front and rear axle and
- adjusting the ACC sensor (12) so that a given or a maximum proportion of the emitted rays are reflected.

2. A method according to claim 1, **characterised in that** the distance between the rear axle and the horizontal axle of the reflecting surface is made equal (a, b) on each side of the vehicle.

3. A method according to claim 2, **characterised in that** in order to obtain the same distance, equidistant marks are made by a measuring instrument on both sides of the vehicle (10) and the reflecting surface is adjusted relative to the marks.

4. A method according to claim 3, **characterised in that** the reflecting surface (11) is adjusted relative to the two marks by using a laser pointer which is so disposed on the reflecting surface (11) that the laser beam parallel with the horizontal axis of the reflecting surface is made to coincide with the marks.

5. A method according to any of the preceding claims, **characterised in that** the position of the longitudinal axis of the vehicle (10) is determined by a laser pointer comprising a level device and aligned with the front and rear axle, and the position information is used to adjust the vertical axis of the reflecting surface (11).

## Revendications

1. Procédé pour aligner un détecteur ACC dans un véhicule (10) comportant les étapes suivantes :
- montage d'une surface de réflexion (11) pour renvoyer les rayons du détecteur ACC émis vers l'avant du véhicule,
- orientation de l'axe horizontal de la surface de réflexion (11) parallèlement à l'essieu arrière du véhicule,
- orientation de l'axe vertical de la surface de réflexion (11), essentiellement perpendiculairement à l'axe longitudinal du véhicule défini par l'alignement de l'essieu avant et de l'essieu arrière,
- ajustage du détecteur ACC (12) de manière qu'une fraction définie ou maximale des rayons émis soit réfléchie.

2. Procédé selon la revendication 1,
**caractérisé en ce que**
des deux côtés du véhicule, on choisit chaque fois une même distance (a, b) entre l'essieu arrière et l'axe horizontal de la surface de réflexion.

3. Procédé selon la revendication 2,
**caractérisé en ce que**
pour obtenir la même distance, on place au moyen d'un instrument de mesure, des marques équidistantes de chaque côté du véhicule (10), et la surface de réflexion est ajustée par rapport à ces marques.

4. Procédé selon la revendication 3,
**caractérisé en ce que**
pour ajuster la surface de réflexion (11) par rapport aux deux marques, on utilise un pointeur laser qui est monté sur la surface de réflexion (11), de manière à ce que le rayon laser parallèle à l'axe horizontal de la surface de réflexion soit amené en correspondance avec les marques.

5. Procédé selon une des revendications précédentes,
**caractérisé en ce qu'**
au moyen d'un pointeur laser, comportant un dispositif de niveau, et aligné par rapport à l'essieu avant et à l'essieu arrière, la position de l'axe longitudinal du véhicule (10) est déterminé et l'axe vertical de la surface de réflexion (11) est réglé à partir de cette information de position.
